# EUROPÄISCHE PATENTANMELDUNG

(11) **EP 2 375 032 A1**
(43) Veröffentlichungstag der Anmeldung: **12.10.2011**
(21) Anmeldenummer: 11161324.6
(22) Anmeldetag: 06.04.2011
(51) Int. Cl.: F02D 9/10, B29C 45/00, B29C 45/14

(54) **Stellwelle in einem Aggregat für eine Brennkraftmaschine**

(30) Priorität: 06.04.2010 DE 102010014045
(71) Anmelder: Mann + Hummel GmbH, 71638 Ludwigsburg (DE)
(72) Erfinder: Battezzati, Marco, 71134 Aldingen (DE)

(57) **Zusammenfassung**

Eine Stellwelle in einem Aggregat für eine Brennkraftmaschine ist in Lagerhülsen drehbar aufgenommen, wobei die Stellwelle als Kunststoff-Spritzgussbauteil ausgeführt und in die Lagerhülsen eingespritzt ist.

## Beschreibung

### Technisches Gebiet

Die Erfindung bezieht sich auf eine Stellwelle in einem Aggregat für eine Brennkraftmaschine nach dem Oberbegriff des Anspruches 1.

### Stand der Technik

Aus der DE 10 2004 063 017 A1 ist eine Saugrohranlage für eine Mehrzylinder-Brennkraftmaschine bekannt, bei der jedem Zylinder über jeweils ein Saugrohr Verbrennungsluft zuführbar ist. Zur Regulierung der einströmenden Verbrennungsluft ist in den Saugrohren jeweils eine Drallklappe angeordnet, wobei mehrere Drallklappen an einem gemeinsamen Wellenabschnitt einer Stellwelle angeordnet sind, welche drehbar im Gehäuse der Saugrohranlage gelagert ist. Die Stellwelle ist zweigeteilt und umfasst zwei Wellenabschnitte, die über ein Kupplungsglied miteinander verbunden sind.

Der Erfindung liegt die Aufgabe zugrunde, eine einfach herzustellende Stellwelle anzugeben, die in einem Aggregat für eine Brennkraftmaschine einsetzbar ist und sich durch eine lange Betriebsdauer und hohe Funktionstüchtigkeit auszeichnet.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Stellwelle kann in einem Aggregat für eine Brennkraftmaschine eingesetzt werden, insbesondere in einer Saugrohranlage für eine Mehrzylinder-Brennkraftmaschine, über die die Luftzufuhr zu den Zylindern steuerbar ist. Die Stellwelle weist Funktionselemente auf, welche bevorzugt radial an der Stellwelle angeordnet und die vorzugsweise als Schwenkklappen ausgeführt sind. Im Falle einer Anordnung der Stellwelle in der Saugrohranlage für die Brennkraftmaschine handelt es sich um Schwenk- bzw. Drallklappen in den Saugrohren zur Steuerung der Luftzufuhr.

Als weiteres Ausführungsbeispiel kommt auch eine Anwendung der Stellwelle zur Verstellung von Drosselklappen oder von sonstigen Regelklappen in Brennkraftmaschinen bzw. einem der Brennkraftmaschine zugeordneten Aggregat in Betracht.

Die Stellwelle ist im montierten Zustand drehbar in einem Gehäuse gelagert, wobei erfindungsgemäß vorgesehen ist, dass die Stellwelle in Lagerhülsen drehbar aufgenommen ist, welche gemeinsam mit der Stellwelle eine zusammenhängende Baueinheit bilden. Dies wird dadurch erreicht, dass die Stellwelle als Kunststoff-Spritzguss-Bauteil ausgeführt und in die Lagerhülsen eingespritzt ist. Die Lagerhülsen werden vor dem Spritzgießen in das Spritzgusswerkzeug eingelegt. Zwischen den Lagerhülsen befinden sich die Funktionselemente an der Stellwelle, welche sich gegenüber der Mantelfläche der Stellwelle radial erheben, so dass die Lagerhülsen zwischen den Funktionselementen unverlierbar auf der Stellwelle aufsitzen. Gegebenenfalls sind an der Stellwelle zusätzliche axiale Anschläge für die Lagerhülsen angespritzt. Da die Stellwelle während des Herstellungsprozesses durch die Öffnungen in den Lagerhülsen hindurchgespritzt wird, ist eine einteilige Ausführung der Stellwelle möglich. Außerdem sind die Lagerhülsen unverlierbar an der Stellwelle gehalten. Die Stellwelle ist so im Bereich der Lagerhülsen gratfrei, da im Bereich der Lagerhülsen keine Trennung im Spritzgusswerkzeug vorgesehen ist.

Gemäß einer besonders vorteilhaften Ausführung ist vorgesehen, dass die Funktionselemente ebenfalls einteilig mit der Stellwelle ausgebildet sind und im Spritzgussverfahren gemeinsam mit der Stellwelle hergestellt werden. Grundsätzlich möglich ist aber auch eine Ausführung der Funktionselemente als separate Bauteile, die mit der Stellwelle fest verbunden werden.

Aufgrund der direkten Lagerung der Stellwelle in den Lagerhülsen sind keine zusätzlichen Lagerböcke erforderlich. Die Stellwelle dreht sich direkt in der Innenausnehmung der Lagerhülsen, welche lediglich in entsprechend vorbereitete Sitze bzw. Aufnahmen im Gehäuse des Aggregats eingesetzt werden müssen. Darüber hinaus sind keine Lagerteile erforderlich.

Die Lagerhülsen weisen entweder eine zylindrische Ausnehmung auf, durch die die Stellwelle gespritzt ist, was den Vorteil einer einfachen Herstellung der Lagerhülsen hat. Gemäß einer bevorzugten Ausführung ist jedoch vorgesehen, dass die Lagerhülsen einen Innenkonus besitzen, was den Vorteil hat, dass die Lagerhülse nach dem Spritzgussvorgang axial auf der Stellwelle verschoben werden kann, wodurch ein Ringspalt zwischen der Mantelfläche der Stellwelle und dem Innenmantel der Lagerhülse entsteht, wobei der Ringspalt die Funktion eines Lagerspiels für eine reibungsreduzierte Lagerung der Stellwelle in den Lagerhülsen hat. Mit dem Einspritzen der Lagerhülsen während des Spritzgussvorgangs passt sich die Stellwelle innerhalb der Lagerhülse an den Innenkonus an und weist dementsprechend eine konische Mantelfläche auf. Während des Auskühlens unterliegt das Material der Stellwelle einer Schrumpfung, wobei das während des Schrumpfungsprozesses entstehende Spiel zwischen der Mantelfläche der Stellwelle und dem Innenmantel der Lagerhülsen durch die axiale Verstellbewegung der Lagerhülsen gegenüber der Stellwelle beeinflusst werden kann. Insbesondere bei einer axialen Relativbewegung, bei der die Lagerhülse in Richtung des kleineren Durchmessers der Stellwelle verschoben wird, wird ein vergrößertes Lagerspiel in Form eines Ringspaltes zwischen Stellwelle und der Aufnahme in der Lagerhülse erreicht. Aufgrund der gleichen Konizität von Stellwelle und Innenkonus in der Lagerhülse ist der Ringspalt über die Länge der Lagerhülse immer konstant. Die radiale Dicke des Ringspaltes hängt dagegen von der aktuellen axialen Relativposition zwischen Stellwelle und Lagerhülse ab.

Der Konuswinkel in der Lagerhülse liegt zweckmäßigerweise in einem Winkelbereich zwischen 0,2° und 2°. Besonders vorteilhafte Winkelwerte für den Innenkonus sind beispielsweise 0,5°, 1° oder 1.2°.

Die Lagerhülse besteht vorzugsweise aus Metall, insbesondere aus Edelstahl und wird vorteilhafterweise im Kaltfließpressverfahren hergestellt. Ggf. wird die Innenfläche der Ausnehmung in der Lagerhülse durch Drehen erzeugt bzw. mittels Drehens einer Feinbearbeitung unterzogen. Auch eine oder beide axiale Stirnflächen der Lagerhülse können durch Drehen erzeugt bzw. einer Feinbearbeitung unterzogen werden.

Alternativ zu einer Herstellung der Lagerhülsen im Kaltfließpressverfahren können die Lagerhülsen auch als gedrehte Teile hergestellt werden.

In einer alternativen Ausführungsform besteht die Lagerhülse aus einem Kunststoff-Gleitlagerwerkstoff, beispielsweise einem Thermoplast wie PTFE (Polytetrafluorethylen) oder einem Duroplast.

### Kurze Beschreibung der Zeichnungen

Weitere Vorteile und zweckmäßige Ausführungen sind den weiteren Ansprüchen, der Figurenbeschreibung und Zeichnungen zu entnehmen. Es zeigen:
Fig. 1 eine perspektivische Ansicht eines Teilbereiches einer Stellwelle für eine Saugrohranlage in einer Mehrzylinder-Brennkraftmaschine, wobei ein Abschnitt der Stellwelle zwischen zwei Funktionselementen in einer Lagerhülse mit Innenkonus gelagert ist,
Fig. 2 die Lagerhülse in perspektivischer Einzeldarstellung,
Fig. 3 die Stellwelle mit geschnittener Lagerhülse in Draufsicht,
Fig. 4 die Stellwelle mit der Lagerhülse in einem Längsschnitt, wobei die Lagerhülse axial in einer Position liegt, in der die Mantelfläche der Stellwelle auf Kontakt zum Innenmantel des Innenkonus der Lagerhülse liegt,
Fig. 5 eine Fig. 4 entsprechende Darstellung, jedoch mit axial verschobener Lagerhülse, wodurch zwischen Mantelfläche, der Stellwelle und Innenmantel der Lagerhülse ein Ringspalt gebildet ist,
Fig. 6 die Stellwelle in Einbaulage in einem Gehäuse der Saugrohranlage,
Fig. 7 den Endabschnitt einer Stellwelle im Gehäuse aus einer weiteren Perspektive,
Fig. 8 eine perspektivische Gesamtdarstellung der Stellwelle mit mehreren Schwenkklappen sowie mehreren Lagerhülsen,
Fig. 9 die in das Gehäuse eingebaute Stellwelle in einer weiteren Darstellung.

In den Figuren sind gleiche Bauteile mit gleichen Bezugszeichen versehen.

### Ausführungsform(en) der Erfindung

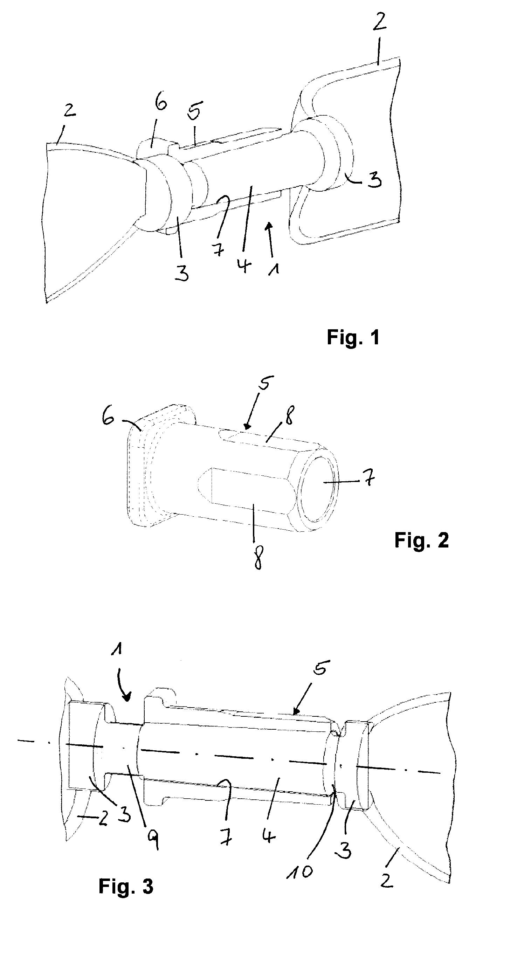

Die in Fig. 1 dargestellte Stellwelle 1 trägt Schwenkklappen 2, welche in Ansaugrohren einer Mehrzylinder-Brennkraftmaschine zur Regulierung der zuzuführenden Verbrennungsluft dienen. Die Stellwelle 1 ist in einem Gehäuse einer Saugrohranlage drehbar gelagert, wobei über die Drehbewegung die Relativposition der Schwenkklappen 2 in den Saugrohren verändert wird, wodurch die aktuelle Luftströmung in den Saugrohren beeinflusst wird.

Die sich radial über die Stellwelle 1 erhebenden Schwenkklappen 2 sind einteilig mit der als Kunststoff-Spritzguss-Bauteil ausgeführten Stellwelle 1 ausgeführt und grenzen an scheibenförmigen Absätzen 3 der Stellwelle. Jeweils zwei scheibenförmige Absätze 3 als Träger von Schwenkklappen 2 liegen axial beabstandet zueinander und sind über einen Lagerabschnitt 4 geringeren Durchmessers miteinander verbunden. Die Stellwelle mit den Schwenkklappen 2, den Absätzen 3 und dem verbindenden Lagerabschnitt 4 bildet ein gemeinsames, einteiliges Bauteil, welches im Spritzgussverfahren hergestellt wird.

Zur drehbaren Lagerung der Stellwelle 1 dient eine Lagerhülse 5 (im Längsschnitt dargestellt), die als Edelstahlbauteil ausgeführt ist und bevorzugt im Kaltfließpressverfahren hergestellt wird. Die Lagerhülse 5 weist einen radial erweiterten Flansch 6 auf, der mit einer freien Stirnfläche eine Anschlagsfläche zur Abstützung an einem gehäuseseitigen Bauteil bildet. Die Lagerhülse 5 weist einen Innenkonus 7 auf, der eine Konizität im Winkelbereich zwischen 0,2° und 2° besitzt. Der Innendurchmesser des Innenkonus 7 ist im Bereich des Flansches 6 kleiner und vergrößert sich in Richtung der dem Flansch gegenüberliegenden Stirnseite.

Der Innenmantel im Innenkonus 7 kann durch Drehen einer Feinbearbeitung unterzogen sein, ebenso die freie axiale Stirnfläche am Flansch 6.

Wie der perspektivischen Darstellung gemäß Fig. 2 zu entnehmen, weist der Außenmantel der Lagerhülse 5 über den Umfang verteilt mehrere, sich in Achsrichtung erstreckende Abflachungen 8 auf, so dass die äußere Mantelfläche einen Mehrkant bildet, beispielsweise einen Vierkant. Dies hat den Vorteil, dass in Einbaulage aufgrund der Mehrkantausführung die Lagerhülse 5 drehgesichert ist, so dass unerwünschte Drehbewegungen der Lagerhülse in dem Gehäuse, in das die Lagerhülse eingebaut ist, ausgeschlossen sind. Das Gehäuse weist eine entsprechende Gegenkontur auf, die ein Verdrehen der Lagerhülse im Gehäuse verhindert. Alternativ zu den Abflachungen sind auch andere Geometrien zur Herstellung einer Verdrehsicherheit ausführbar, wie beispielsweise Rippen oder Nuten, wobei eine Maßnahme zur Vermeidung einer um die Längsachse rotationssymmetrische Lagerhülse ausreicht.

Die Stellwelle 1 wird im Spritzgussverfahren hergestellt, hierbei wird die Stellwelle in die Lagerhülsen 5 eingespritzt, so dass ein zusammenhängender Verbund von Stellwelle und einer oder mehreren Lagerhülsen gegeben ist. Die Absätze 3 weisen einen größeren Durchmesser auf als der Innenkonus in der Lagerhülse 5, so dass die Lagerhülse 5 unverlierbar auf der Stellwelle 1 gehalten ist.

Wie der Darstellung gemäß Fig. 3 zu entnehmen, schließen sich axial beidseitig an den Lagerabschnitt 4 radial reduzierte Abschnitte 9 bzw. 10 auf, welche jeweils zwischen dem Lagerabschnitt 4 und den Absätzen 3 angeordnet sind. Die axiale Erstreckung der beiden radial reduzierten Abschnitte 9 und 10 unterscheidet sich voneinander. Der radial reduzierte Abschnitt 9 befindet sich auf der Konusseite mit kleinerem Durchmesser und besitzt eine größere axiale Erstreckung als der radial reduzierte Abschnitt 10 auf der Konusseite mit größerem Durchmesser.

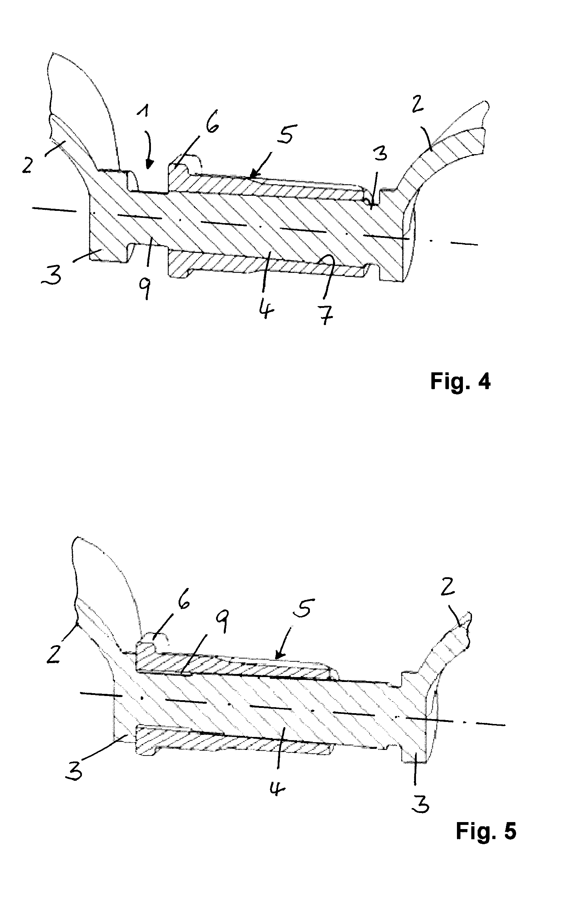

Die Fig. 4 und 5 zeigen das gleiche Ausführungsbeispiel mit einer Stellwelle 1 und einer Lagerhülse 5, wobei die Lagerhülse 5 in axial zwei unterschiedlichen Stellungen gezeigt ist. In Fig. 4 befindet sich die Lagerhülse 5 in einer axialen Position, in der der Außenmantel des Lagerabschnittes 4 auf Kontakt zum Innenmantel des Innenkonus 7 der Lagerhülse liegt. In Fig. 5 ist dagegen die Lagerhülse 5 axial in Richtung des kleineren Durchmessers des Lagerabschnittes 4 verschoben, so dass zwischen der Mantelfläche des Lagerabschnittes 4 der Stellwelle 1 und dem Innenmantel des Innenkonus 7 der Lagerhülse 5 ein Ringspalt gebildet ist, welcher ein Lagerspiel bildet. Die maximale Verschiebebewegung wird von dem Absatz 3 begrenzt, an welchem die Stirnseite des Flansches 6 der Lagerhülse 5 anschlägt (Fig. 5).

Grundsätzlich möglich ist auch eine Verschiebebewegung der Lagerhülse 5 in Richtung des größeren Durchmessers des Lagerabschnittes 4 der Stellwelle 1, was anhand von Fig. 3 zu erkennen ist, wobei in diesem Fall die Lagerhülse 5 bis in den Bereich des radial reduzierten Abschnittes 10 verschoben wird. Bei einer Verschiebebewegung in dieser Richtung wird ein evtl. bestehendes Spiel zwischen dem Lagerabschnitt 4 und dem Innenkonus, welches beispielsweise durch einen Schrumpfungsprozess der Stellwelle entsteht, reduziert.

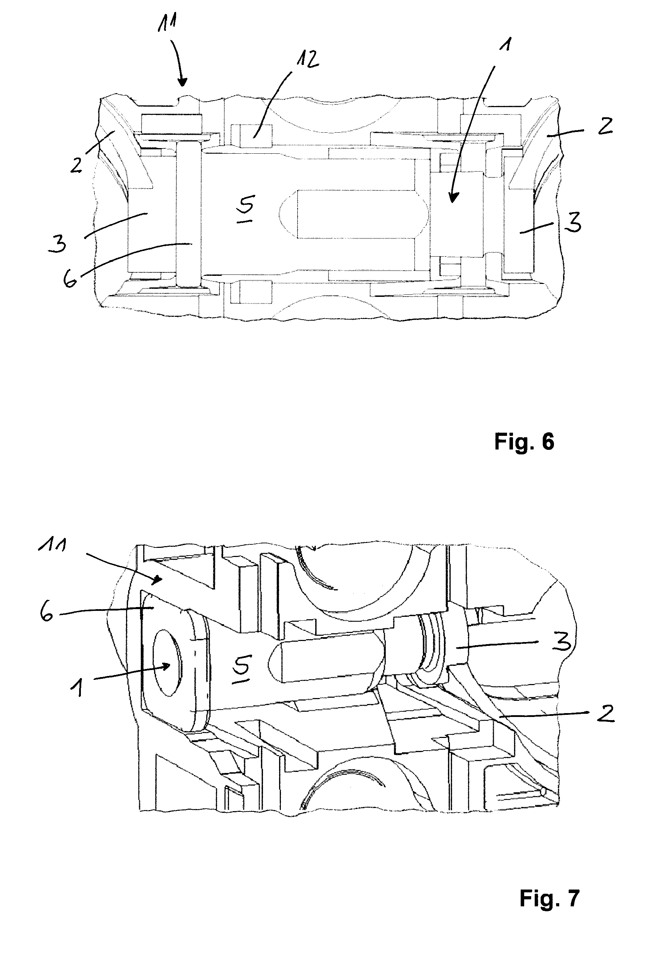

In den Fig. 6, 7 und 9 ist die Stellwelle 1 einschließlich der Lagerhülse 5 in Einbauposition in einem Gehäuse 11 der Saugrohranlage dargestellt. Die Lagerung der Stellwelle 1 erfolgt ausschließlich über die Lagerhülsen 5, welche drehfest im Gehäuse 11 aufgenommen sind. Zur axialen Sicherung der Lagerhülsen 5 können am Gehäuse 11 Federzungen 12 (Fig. 6) einteilig ausgebildet sein, die bezogen auf die Längs- bzw. Drehachse der Stellwelle 1 radial federnd ausgebildet sind und den Flansch 6 formschlüssig sichern und dadurch axial abstützen.

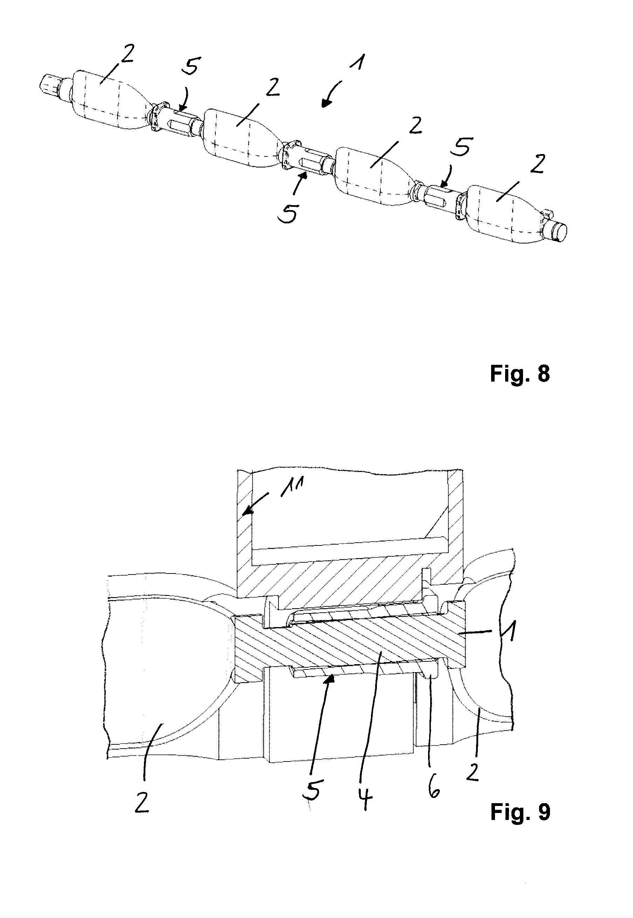

In Fig. 8 ist die Stellwelle 1 einschließlich einer Mehrzahl von Lagerhülsen 5 in einer perspektivischen Gesamtdarstellung gezeigt. Die Stellwelle 1 weist insgesamt vier Schwenkklappen 2 auf, wobei jeweils zwischen benachbarten Schwenkklappen 2 ein Lagerabschnitt mit einer Lagerhülse 5 angeordnet ist. Gegebenenfalls sind weitere Lagerhülsen 5 im Bereich der axialen Stirnseiten der Stellwelle 1 angeordnet.

Die Lagerhülsen 5 können zum Teil in Gegenrichtung angeordnet sein, dergestalt, dass von den mit einem Innenkonus versehenen Lagerhülsen 5 eine Lagerhülse umgekehrt angeordnet ist wie die übrigen Lagerhülsen, so dass zum Herstellen eines Lagerspiels zwischen Mantelfläche des Lagerabschnittes an der Stellwelle und Innenmantel der Lagerhülse die umgekehrt positionierte Lagerhülse axial in Gegenrichtung verschoben werden muss.

## Patentansprüche

1. Stellwelle in einem Aggregat für eine Brennkraftmaschine, mit auf der drehbar gelagerten Stellwelle (1) angeordneten Funktionselementen (2), **dadurch gekennzeichnet, dass** die Stellwelle (1) in Lagerhülsen (5) drehbar aufgenommen ist, wobei die Lagerhülsen (5) einen Innenkonus (7) aufweisen, wobei die Stellwelle (1) als Kunststoff-Spritzguss-Bauteil ausgeführt und in die Lagerhülsen (5) eingespritzt ist.

2. Stellwelle nach Anspruch 1, **dadurch gekennzeichnet, dass** die Funktionselemente als Schwenkklappen (2) ausgebildet sind.

3. Stellwelle nach Anspruch 1 oder 2, **dadurch gekennzeichnet, dass** die Stellwelle (1) mit den Funktionselemente (2) als einteiliges Bauteil ausgeführt ist.

4. Stellwelle nach Anspruch 3, **dadurch gekennzeichnet, dass** der Innenkonus (7) einen Konuswinkel von 0,2° bis 2° aufweist und insbesondere 0,5° beträgt.

5. Stellwelle nach Anspruch 4, **dadurch gekennzeichnet, dass** der Konuswinkel 0,5° beträgt.

6. Stellwelle nach einem der Ansprüche 1 bis 5, **dadurch gekennzeichnet, dass** die Lagerhülse (5) aus Edelstahl besteht.

7. Stellwelle nach einem der Ansprüche 1 bis 6, **dadurch gekennzeichnet, dass** die Lagerhülse (5) im Kaltfließpressverfahren hergestellt ist.

8. Stellwelle nach einem der Ansprüche 1 bis 5, **dadurch gekennzeichnet, dass** die Lagerhülse (5) aus einem Kunststoff-Gleitlagerwerkstoff besteht.

9. Stellwelle nach Anspruch 8, **dadurch gekennzeichnet, dass** die Lagerhülse (5) aus PTFE (Polytetrafluorethylen) besteht.

10. Stellwelle nach einem der Ansprüche 1 bis 9, **dadurch gekennzeichnet, dass** der Außenmantel der Lagerhülse (5) über den Umfang verteilt mehrere, sich in Achsrichtung erstreckende Abflachungen (8) aufweist, wobei die äußere Mantelfläche einen Mehrkant bildet.

11. Stellwelle nach einem der Ansprüche 1 bis 10, **dadurch gekennzeichnet, dass** zumindest eine der Lagerhülsen (5) auf der Stellwelle (1) umgekehrt angeordnet ist wie die übrigen Lagerhülsen (5), derart, dass die Orientierung des Winkels des Innenkonus (7) von zumindest einer Lagerhülse (5) entgegengesetzt ist zu anderen Lagerhülsen (5).

12. Saugrohranlage für eine Mehrzylinder-Brennkraftmaschine, mit einer Stellwelle (1) nach einem der Ansprüche 1 bis 11 zur Regulierung der durch Saugrohre einströmenden Verbrennungsluft.

13. Verfahren zur Herstellung einer Sauganlage für eine Mehrzylinder-Brennkraftmaschine zur Steuerung der Luftzufuhr mit einer Stellwelle (1) nach einem der Ansprüche 1 bis 11, **dadurch gekennzeichnet, dass** das Lagerspiel zwischen zumindest einer Lagerhülse (5) und der Stellwelle (1) durch eine axiale Verschiebung der Lagerhülse (5) auf der Stellwelle (1) nach dem Spritzgussvorgang eingestellt wird.
